# EUROPEAN PATENT SPECIFICATION

(11) **EP 2 518 369 B1**
(45) Date of publication and mention of the grant of the patent: **22.04.2015**
(21) Application number: 11164055.3
(22) Date of filing: 28.04.2011
(51) Int. Cl.: F16H 37/04, F16H 61/70

(54) **Drive train for a vehicle and method to control a drive train for a vehicle**
Antriebsstrang für ein Fahrzeug und Verfahren zur Steuerung des Antriebsstrangs für ein Fahrzeug
Ensemble de transmission et procédé de contrôle d'ensemble de transmission pour un véhicule

(43) Date of publication of application: 31.10.2012
(73) Proprietor: Volvo Car Corporation, 40531 Göteborg (SE)
(72) Inventor: Almkvist, Göran, 44331 Lerum (SE)
(74) Representative: Kraenzmer, Martin

(56) References cited:
- WO-A1-2010/087705
- US-B1- 6 217 475

## Description

### TECHNICAL FIELD

The present invention relates to the field of automotive technology and especially to the field of drive trains.

### BACKGROUND ART

A standard drive train for a vehicle comprises a combustion engine, a main transmission and a rotatable mass, such as a flywheel or a torque converter, arranged there between. The rotatable mass absorbs oscillations caused by irregularities from the combustion engine. The dampening of the oscillations is essential to avoid load spikes in the transmission and that the gears in the transmissions chatter.

It is desired to drive the engine at an optimal speed, at which the engine is as efficient as possible, for a given power output. A traditional gear change is not fast enough to get a satisfactory driveability running the engine at optimal efficiency.

US 6,217,475 B1 discloses a driveline system with a planetary gear arrangement cooperating with a flywheel member to provide a dual mass variable inertia flywheel assembly.

In a drive train with a flywheel arranged directly at the output shaft of the combustion engine and a clutch is arranged between the output shaft of the combustion engine and the input shaft of the transmission. During a gear change of the transmission, the clutch is disengaged. To enable a smooth engagement of the clutch after a gear change, the speed of the output shaft of the engine and the speed of the input shaft of the transmission has to be synchronised after the gear change. If the transmission has changed from a lower to a higher gear, the speed of the drive shaft of the engine has to decrease and if the transmission has changed from a higher gear to a lower gear, the speed of the engine, and thereby also the flywheel, has to be increased before the engagement of the clutch. This change in speed of the output shaft of the engine is time consuming, since the whole mass of the flywheel must be accelerated or decelerated by the engine, which has a lower inertia than the flywheel. The flywheel can have an inertia about 10 times of the inertia of the engine.

Hence there is a desire to remove the above mentioned disadvantages.

### SUMMARY

The object of the present invention is to provide an inventive drive train and method to control said drive train, which increases the efficiency of the drive train.

Said objects are achieved by a drive train according to claim 1 and a method according to claim 6.

The invention rest upon the idea, that a gear switch is performed in order to increase/decrease the speed of the engine and without accelerating a rotating mass, i.e. a flywheel or a torque converter. Benefits there from would be fast response times when more power is demanded from the engine and better emissions, since the engine can be operated at an optimal speed.

The inventive drive train is adapted for a vehicle, and comprises at least a combustion engine, a main transmission and a rotatable mass, such as a flywheel or a torque converter, arranged there between. The art of rotatable mass is not important for the invention, which is desirable to use in drive trains with either flywheel or a torque converter.

The inventive drive train is characterised in, that an additional transmission mechanism is arranged in the power flow in between the main transmission and the engine. Said additional transmission mechanism is provided with at least a first and a second transmission ratio and wherein said first transmission ratio is higher than said second transmission ratio. The additional transmission mechanism can be shifted between the first and the second transmission ratio in order to increase or decrease the engine speed and simultaneously keeping the speed of said rotatable mass and masses in the main transmission unaffected thereof, i.e. without accelerating said rotatable mass or any masses in the main transmission.

When a gear change is performed by the additional transmission mechanism during driving, the speed of the engine is changed, i.e. increased or decreased, depending of in what direction the gear change has been performed. Because the engine does not have to accelerate any masses and thereby just accelerate/decelerate its own inertia, the gear change can be performed much quicker than a traditional gear change. The quick gear change can be used during driving to increase the torque from the engine, without performing a traditional gear change. Further, the engine can due to the inventive additional transmission mechanism be driven in a more narrow speed range, which is beneficial considering fuel efficiency and emissions.

The additional transmission mechanism can be used in combination of a manual transmission, an automated manual transmission or an automatic transmission as a main transmission. Independently of the choice of main transmission, the control of the additional transmission is controlled by a vehicle management system (VMS) or one of its subsystems, such as a transmission management system (TMS) and/or engine management system (EMS).

There are two main options of placement of the additional transmission, either in the power flow in between the engine and the rotatable mass or in the power flow in between the rotatable mass and the transmission. However, in a first embodiment of the invention, the additional transmission mechanism is arranged in the power flow between the combustion engine and the rotatable mass. Because the additional transmission mechanism is arranged in the power flow before the rotatable mass, the combustion engine is disconnected from the rotatable mass during a gear shifting operation of the additional transmission, wherein the combustion engine just has to accelerate/decelerate its own inertia.

In a second embodiment of the invention, the additional transmission mechanism is provided in the power flow in between the rotatable mass and the main transmission. The rotatable mass is provided with a clutch, such that said clutch can be disengaged and the rotatable mass be detached from the rotation of the drive train before a transmission ratio change of the additional transmission mechanism is performed, and wherein said clutch can be engaged and the rotatable mass rotates with the drive train after a transmission ratio change of the additional transmission mechanism has been performed. Due to the possibility to engage and disengage the rotatable mass, it does not have to be accelerated or decelerated during a transmission ratio change of the additional transmission mechanism. However, when the rotatable mass is attached to the drive line it still has to be accelerated or decelerated, at this point though, this is not a problem, since the whole drive line is closed and the inertia of the rotatable mass is very small in comparison with the kinetic energy of the vehicle, applied thereon through the closed drive line of the vehicle.

The second embodiment of the invention provides the same benefits as the first embodiment. Further, an additional advantage of this second embodiment of the invention over said first embodiment is that the additional transmission is not subjected to the oscillations of the combustion engine, due to its placement in the power flow, after the rotatable mass, which absorb these oscillations.

During the short time interval as the rotatable mass is detached from the drive train, the additional transmission mechanism and the main transmission is subjected to the oscillations caused by the combustion engine. However, during this short time interval, the additional transmission performs the change of transmission ratio, wherein the drive line is open. Further, because the rotatable mass is attached to the drive line directly after the additional transmission has performed the change of transmission ratio, the time interval during which the additional transmission and the main transmission is exposed to the oscillations are so short that the it won't be noticeable for a drive or a passenger of the vehicle, i.e. can be neglected.

In an advantageous version of the invention, the additional transmission mechanism is provided with a scissors gearing. A scissor gearing could be provided in both of the first and second embodiment of the invention. A scissors gearing prevent a rattling noise in the gearing mechanism caused by oscillations in the drive train.

The additional transmission mechanism is preferably a planetary gearing or a gear step, other possibilities are a variator of any kind. A planetary gearing is a better solution, which however can be too expensive. A gear step is the more cost effective solution.

A preferred first transmission ratio is a direct drive, i.e. 1:1, and a second transmission ratio could for example be 1:2. It is preferable in to have a direct drive as a first transmission ratio, because the friction losses are at lowest with a direct drive. The second transmission ratio however, is not bound to be 1:2, the second transmission ration is rather to be chosen dependent of what is most beneficial for the total powertrain installation.

The drive train is controlled by a vehicle management system (VMS), which therefore also controls the additional transmission mechanism. A VMS comprises normally of several sub-management systems such as transmission management system and engine management system, the hierarchy of the management systems are well known and not the scope of this invention, wherein the subject won't be discussed further. The additional transmission mechanism is to be fully automatic and controlled by the VMS, such that the drive cannot actively change between the transmission ratio of the additional transmission mechanism. Still the additional transmission mechanism is fully functional with either of an automated, an automatic or a manual transmission.

The method however, comprises the steps of:
- Using the first transmission ratio of the additional transmission during launch of the vehicle. This can be set just before launch or as default during start up of the vehicle.
- When an upper speed threshold value of the engine is reached, the additional transmission mechanism changes from the first transmission ratio to the second transmission ratio.
- when an lower speed threshold value of the engine is reached, the additional transmission mechanism changes from the second transmission ratio to the first transmission ratio.

Due to the inventive method, fast transmission ratio changes can are made by the additional transmission mechanism in between the ordinary gear changes by the main transmission, the combustion engine can thereby be held within a more narrow speed range, at which a higher torque is available, the efficiency of the drive line is increased and the emissions decreased.

Further methods steps are:
- when the main transmission is changing from a lower to a higher gear, the additional transmission mechanism is changing from the second to the first transmission ratio, and
- when the main transmission is changing from a higher to a lower gear, the additional transmission mechanism is changing from the first to the second transmission ratio.

Whereby, with the above further method steps, the additional transmission mechanism can be used with all speeds of the main transmission.

In an embodiment of the inventive method, the rotatable mass is disengaged from the drive train before the additional transmission changes its transmission ratio. This method step is essential when the additional transmission mechanism is arranged in the power flow between the rotatable mass and the transmission, in order to avoid an acceleration or deceleration of the rotatable mass during a gear shift.

### BRIEF DESCRIPTION OF THE DRAWINGS

The present invention will now be described in detail with reference to the figures, wherein:
- Figure 1a: shows a schematic drawing of a drive line according to the invention;
- Figure 1b: shows schematic drawing of a second embodiment of a drive line according to the invention;
- Figure 2a, b: shows an example of an additional transmission mechanism according to the invention;
- Figure 3a, b: shows a diagram illustrating the behaviour of the drive line with and without the additional transmission.

### DETAILED DESCRIPTION

In the following embodiments of the invention are shown and described, simply by way of illustration of different modes of carrying out the invention.

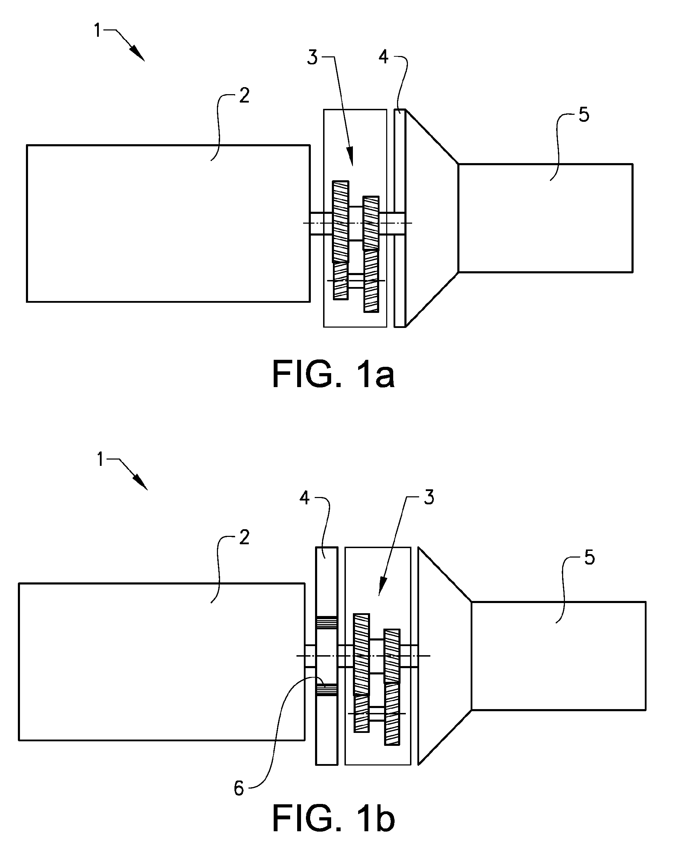

Figure 1 shows a schematic drawing of the invention, in fig. 1a is a first embodiment of the invention illustrated and in fig. 1b is a second embodiment of the invention illustrated.

The drive line 1 according to the first and second embodiment of the invention comprises; a combustion engine 2, an additional transmission mechanism 3, a rotatable mass 4 and a main transmission 5 In a first embodiment (fig. 1a) of the invention, the additional transmission mechanism 3 is arranged in the power flow between the combustion engine 2 and the rotatable mass 4. In a second embodiment (fig. 1b) of the invention, the additional transmission mechanism 3 is arranged in the power flow between the rotatable mass 4 and the main transmission 5.

The rotational mass 4 might be a torque converter in the first embodiment and a flywheel in the second embodiment. This however, is secondary and not an essential part of the invention, the additional transmission mechanism 3 is suitable to use with any rotatable mass 4.

In the first embodiment a transmission ratio change of the additional transmission mechanism 3 does not accelerate or decelerate the rotatable mass 4, wherein this change can be made very quickly, i.e. about the same time needed to open the throttle.

In the second embodiment the rotatable mass 4 is arranged in the power flow before the additional transmission mechanism 3, wherein to enable a transmission ratio change of the additional transmission mechanism 3, without accelerating or decelerating the rotatable mass 4, the rotatable mass for is attached with the drive train 1 with a clutch 6, wherein the clutch 6 disengages during a gear change of the additional transmission mechanism 3. The clutch 6 engages immediately after the gear change of the additional transmission mechanism is performed, wherein the rotatable mass 4 is accelerated to the output speed of the engine 2. When the drive line 1 is closed, the rotatable mass 4 is accelerated/decelerated by the whole kinetic energy of the vehicle, in comparison with which the mass of the rotatable mass is negligible.

The clutch 6 may be any clutch device suitable for the task. Clutches engaging and disengaging a rotatable mass to/from a shaft are known and won't be further described here.

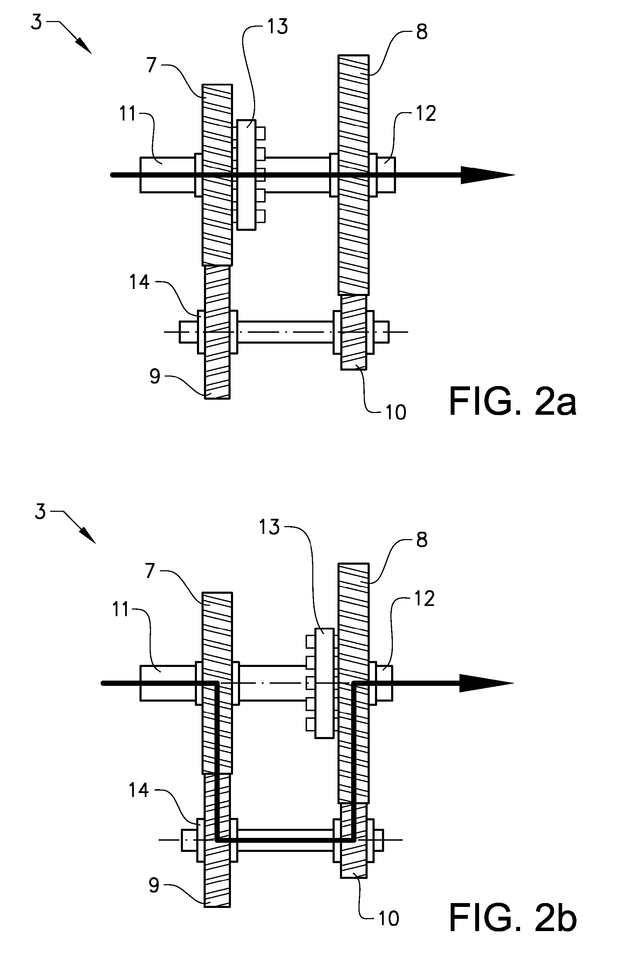

Fig. 2a and 2b discloses a schematic design example of an additional transmission mechanism 3. The additional transmission mechanism 2 according to the example comprises four gear wheels 7, 8, 9, 10, a clutch 13 and a one way clutch 14. In fig. 2a the additional transmission mechanism 3 transmits power over the first transmission ratio (1:1) and in fig. 2b the additional transmission mechanism 3 transmits power over the second transmission ration. The second transmission ratio can for example be 1:2.

To change between the first and the second transmission ratio, the clutch 13 engages and disengages. In the first transmission ratio, shown in fig. 2a, the clutch 12 is engaged and connects the output shaft 11 of the combustion engine 2 directly to the input shaft 12 of the transmission 5, wherein the one way clutch 14 freewheels.

In the second transmission ratio, shown in fig. 2b, the clutch 12 is disengaged, wherein the output shaft 11 of the combustion engine 2 drives the input shaft 12 of the main transmission 5 over the two gear steps 7, 9; 10, 8.

The invention is not limited to the specific design example of the additional gearing 3 shown in the figures, but includes all variation within the scope of the present claims. The additional transmission mechanism 3 can have any suitable number of gearwheels and the clutches 13, 14 can be differently arranged and/or designed, as long as the additional transmission mechanism 3 can perform the transmission ratio change needed for the invention. Other possible additional transmission mechanisms 3 are planetary gearing or belt variator or any other kind of variator.

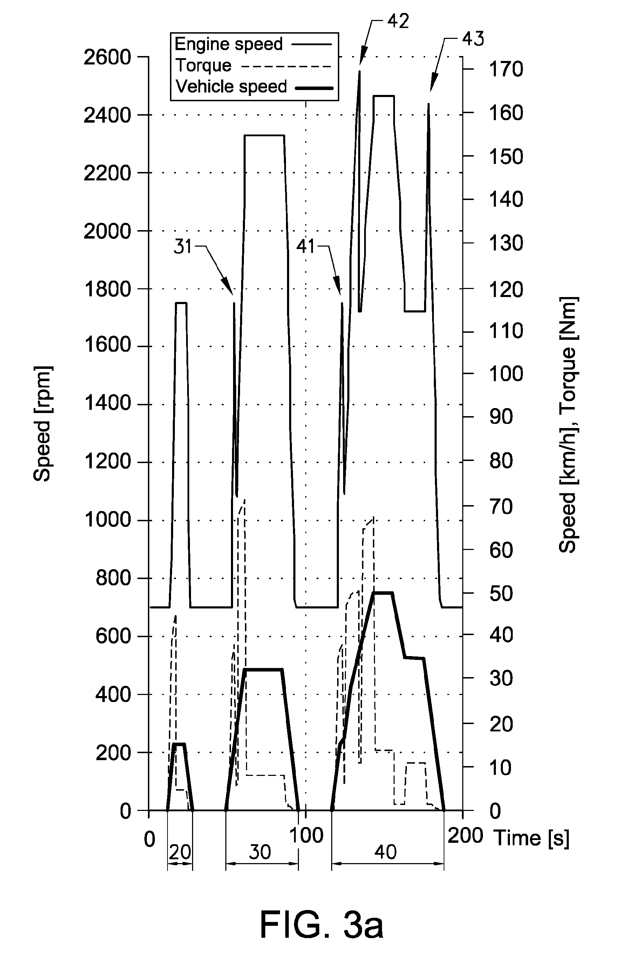

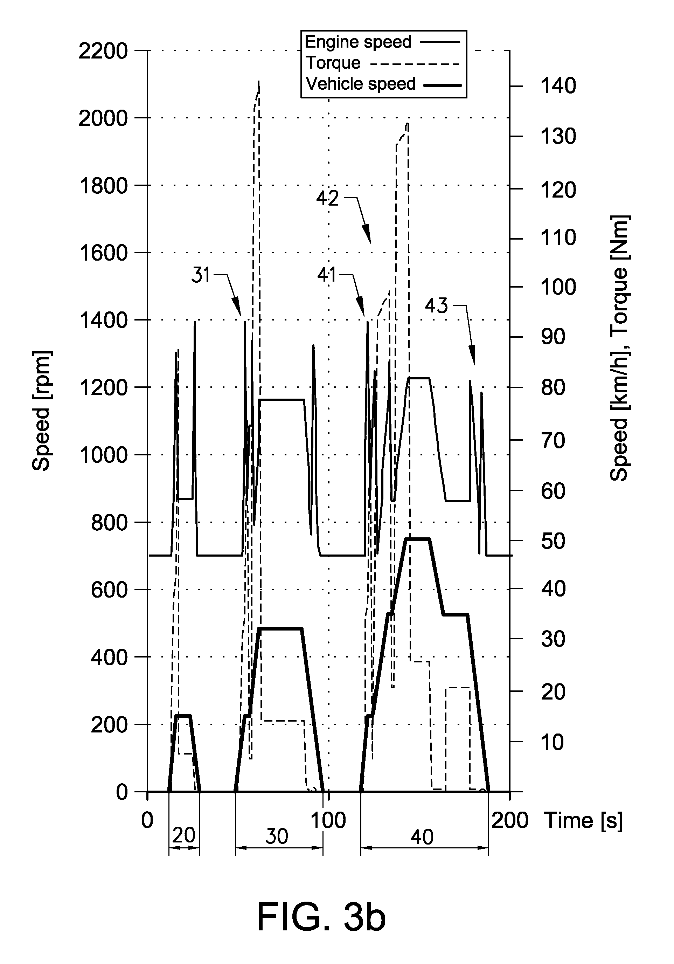

In fig. 3a and 3b are two schematic diagrams shown with a simulation of a new European driving cycle (NEDC), wherein just the urban driving cycle (UDC) for a vehicle shown. In the diagrams the speed of the vehicle, the speed of the engine and the available torque are shown. Fig. 3a shows the driving cycle for an ordinary vehicle, and fig. 3b shows the same driving cycle for a vehicle with an inventive additional transmission mechanism 3.

In the driving cycle acceleration and deceleration with starts and stops 20, 30, 40 are performed: A first start and stop 20 at which the vehicle is accelerated to about 15 km/h and thereafter decelerated back to stand still, wherein the same gear in the main transmission 5 is used. A second start and stop 30 at which the vehicle is accelerated to about 32 km/h and thereafter decelerated back to stand still, whereby one gear change 31 is performed by the main transmission 5 during the acceleration and no gear changes is performed by the main transmission 5 during the deceleration. A third start stop 40 at which the vehicle is accelerated to about 50 km/h, whereby two gear changes 41, 42 are performed by the main transmission 5 during the acceleration and one gear change 43 is performed by the main transmission 5 during the deceleration.

The gear changes by the main transmission 5 are performed with the same timing in both fig. 3a and fig. 3b. As can be seen, the speed of the engine is held lower in fig. 3b, due to the additional transmissions mechanisms transmission ratio changes, whereby a higher torque is available. The additional transmission 3 strives to keep the speed of the engine 2 is held low to reduce friction and pumping losses, whereby the additional transmission 3 automatically performs a transmission ratio change from the second transmission ratio to the first transmission ratio when the speed of the engine 2 becomes too low, i.e. during a retardation of the vehicle.

As can be seen in a comparison of the diagrams in fig. 3a and 3b, the vehicle is driven with a lower engine speed and a higher torque, whereby the engine reaches a better efficiency; this is due to the inventive additional transmission and the method to control the additional transmission 3. The additional transmission 3 can be used in combination with all the gears of the main transmission 5.

Reference signs mentioned in the claims should not be seen as limiting the extent of the matter protected by the claims, and their sole function is to make claims easier to understand.

As will be realised, the invention is capable of modification in various obvious respects, all without departing from the scope of the appended claims. Accordingly, the drawings and the description thereto are to be regarded as illustrative in nature, and not restrictive.

## Claims

1. Drive train (1) for a vehicle, wherein said drive train (1) at least comprises a combustion engine (2), a main transmission (5) and a rotatable mass (4), such as a flywheel or a torque converter, arranged there between, wherein said drive train further comprises an additional transmission mechanism, and said additional transmission mechanism (3) is arranged in the power flow in between the main transmission (5) and the engine (2), wherein said additional transmission mechanism (3) is provided with at least a first and a second transmission ratio, said first transmission ratio is higher than said second transmission ratio, and wherein said additional transmission mechanism (3) is able to change between the first and the second transmission ratio in order to increase or decrease the engine speed and simultaneously keeping the speed of said rotatable mass (4) and masses in the main transmission (5) unaffected thereof,
**characterized in**
**that** said additional transmission mechanism (3) is provided between the rotatable mass (4) and the main transmission (5), wherein the rotatable mass (4) is provided with a clutch (6), such that said clutch (6) can be disengaged and the rotatable mass (4) be detached from the rotation of the drive train (1) before a transmission ratio change of the additional transmission mechanism (3) is performed, and wherein said clutch (6) can be engaged and the rotatable mass (4) rotates with the drive train (1) after a transmission ratio change of the additional transmission mechanism (3) has been performed.

2. Drive train (1) according to any of the preceding claims, wherein said additional transmission mechanism (3) is provided with scissors gearing.

3. Drive train (1) according to any of the preceding claims, wherein the additional transmission mechanism (3) is a planetary gearing.

4. Drive train according to any of the claims 1- 2, wherein the additional transmission mechanism is a gear step.

5. Drive train according to any of the preceding claims, wherein the first transmission ratio is a direct drive; 1:1, and the second transmission ratio is 1:2.

6. Method for controlling a drive train (1) according to any of the claims 1-5, wherein the additional transmission mechanism (3) is controlled by a vehicle management system (VMS), and wherein
• during launch of the vehicle, the first transmission ratio of the additional transmission mechanism (3) is used,
• when an upper speed threshold value of the engine (2) is reached, the additional transmission mechanism (3) changes from the first transmission ratio to the second transmission ratio, and
• when an lower speed threshold value of the engine (2) is reached, the additional transmission mechanism (3) changes from the second transmission ratio to the first transmission ratio,
• the rotatable mass (4) is disengaged from the drive train (1) before the additional transmission (3) changes its transmission ratio.

7. Method according to claim 6, wherein
• when the main transmission (5) is changing from a lower to a higher gear, the additional transmission mechanism (3) is changing from the second to the first transmission ratio, and
• when the main transmission (5) is changing from a higher to a lower gear, the additional transmission mechanism (3) is changing from the first to the second transmission ratio.

8. Vehicle provided with an additional transmission mechanism (3) according to any of the claims 1-5.

## Patentansprüche

1. Triebstrang (1) für ein Fahrzeug, wobei der Triebstrang (1) wenigstens eine Brennkraftmaschine (2), ein Hauptgetriebe (5) und eine dazwischen angeordnete drehbare Masse (4) wie etwa ein Schwungrad oder einen Drehmomentwandler umfasst, wobei der Triebstrang ferner einen zusätzlichen Getriebemechanismus umfasst und wobei der zusätzliche Getriebemechanismus (3) in dem Kraftfluss zwischen dem Hauptgetriebe (5) und der Kraftmaschine (2) angeordnet ist, wobei der zusätzliche Getriebemechanismus (3) wenigstens mit einem ersten und einem zweiten Übersetzungsverhältnis versehen ist, wobei das erste Übersetzungsverhältnis höher als das zweite Übersetzungsverhältnis ist, und wobei der zusätzliche Getriebemechanismus (3) zwischen dem ersten und dem zweiten Übersetzungsverhältnis wechseln kann, um die Kraftmaschinendrehzahl zu erhöhen oder zu erniedrigen und um gleichzeitig die Drehzahl der drehbaren Masse (4) und von Massen in dem Hauptgetriebe (5) hiervon unbeeinflusst zu lassen,
**dadurch gekennzeichnet,**
**dass** der zusätzliche Getriebemechanismus (3) zwischen der drehbaren Masse (4) und dem Hauptgetriebe (5) vorgesehen ist, wobei die drehbare Masse (4) mit einer Kupplung (6) versehen ist, derart, dass die Kupplung (6) ausgerückt werden kann und die drehbare Masse (4) von der Drehung des Triebstrangs (1) entkoppelt wird, bevor ein Übersetzungsverhältniswechsel des zusätzlichen Getriebemechanismus (3) ausgeführt wird, und wobei die Kupplung (6) eingerückt werden kann und die drehbare Masse (4) sich mit dem Triebstrang (1) dreht, nachdem ein Übersetzungsverhältniswechsel des zusätzlichen Getriebemechanismus (3) ausgeführt worden ist.

2. Triebstrang (1) nach einem der vorhergehenden Ansprüche, wobei der zusätzliche Getriebemechanismus (3) mit einem Scherengetriebe versehen ist.

3. Triebstrang (1) nach einem der vorhergehenden Ansprüche, wobei der zusätzliche Getriebemechanismus (3) ein Planetengetriebe ist.

4. Triebstrang nach einem der Ansprüche 1-2, wobei der zusätzliche Getriebemechanismus ein Stufengetriebe ist.

5. Triebstrang nach einem der vorhergehenden Ansprüche, wobei das erste Übersetzungsverhältnis ein Direktantrieb, 1:1, ist und das zweite Übersetzungsverhältnis 1:2 ist.

6. Verfahren zum Steuern eines Triebstrangs (1) nach einem der Ansprüche 1-5, wobei der zusätzliche Getriebemechanismus (3) durch ein Fahrzeugmanagementsystem (VMS) gesteuert wird und wobei
- während des Anfahrens des Fahrzeugs das erste Übersetzungsverhältnis des zusätzlichen Getriebemechanismus (3) verwendet wird,
- dann, wenn ein oberer Drehzahlschwellenwert der Kraftmaschine (2) erreicht ist, der zusätzliche Getriebemechanismus (3) von dem ersten Übersetzungsverhältnis zu dem zweiten Übersetzungsverhältnis wechselt und
- dann, wenn ein unterer Drehzahlschwellenwert der Kraftmaschine (2) erreicht ist, der zusätzliche Getriebemechanismus (3) von dem zweiten Übersetzungsverhältnis zu dem ersten Übersetzungsverhältnis wechselt, und
- die drehbare Masse (4) von dem Triebstrang (1) entkoppelt wird, bevor das zusätzliche Getriebe (3) das Übersetzungsverhältnis wechselt.

7. Verfahren nach Anspruch 6, wobei
- dann, wenn das Hauptgetriebe (5) von einem niedrigeren zu einem höheren Gang wechselt, der zusätzliche Getriebemechanismus (3) von dem zweiten zu dem ersten Übersetzungsverhältnis wechselt, und
- dann, wenn das Hauptgetriebe (5) von einem höheren zu einem niedrigeren Gang wechselt, der zusätzliche Getriebemechanismus (3) von dem ersten zu dem zweiten Übersetzungsverhältnis wechselt.

8. Fahrzeug, das mit einem zusätzlichen Getriebemechanismus (3) nach einem der Ansprüche 1-5 versehen ist.

## Revendications

1. Groupe motopropulseur (1) pour un véhicule, dans lequel ledit groupe motopropulseur (1) comprend au moins un moteur à combustion interne (2), une transmission principale (5) et une masse rotative (4), telle qu'un volant d'inertie ou un convertisseur de couple, disposée entre eux, ledit groupe motopropulseur comprenant en outre un mécanisme de transmission supplémentaire et ledit mécanisme de transmission supplémentaire (3) étant disposé dans le flux de puissance entre la transmission principale (5) et le moteur (2), ledit mécanisme de transmission supplémentaire (3) étant pourvu d'au moins un premier et un deuxième rapport de transmission, ledit premier rapport de transmission étant supérieur audit deuxième rapport de transmission, et ledit mécanisme de transmission supplémentaire (3) étant apte à commuter entre le premier et le deuxième rapport de transmission afin d'augmenter ou de diminuer la vitesse du moteur et de maintenir simultanément inchangées la vitesse de ladite masse rotative (4) et des masses dans la transmission principale (5),
**caractérisé en ce que**
ledit mécanisme de transmission supplémentaire (3) est prévu entre la masse rotative (4) et la transmission principale (5), la masse rotative (4) étant pourvue d'un embrayage (6) de telle sorte que ledit embrayage (6) puisse être désengagé et que la masse rotative (4) puisse être détachée de la rotation du groupe motopropulseur (1) avant qu'un changement de rapport de transmission du mécanisme de transmission supplémentaire (3) ne soit effectué, et ledit embrayage (6) pouvant être engagé et la masse rotative (4) tournant avec le groupe motopropulseur (1) après qu'un changement de rapport de transmission du mécanisme de transmission supplémentaire (3) a été effectué.

2. Groupe motopropulseur (1) selon la revendication précédente, dans lequel ledit mécanisme de transmission supplémentaire (3) est pourvu d'un engrenage à ciseaux.

3. Groupe motopropulseur (1) selon l'une quelconque des revendications précédentes, dans lequel le mécanisme de transmission supplémentaire (3) est un engrenage planétaire.

4. Groupe motopropulseur selon l'une quelconque des revendications 1 et 2, dans lequel le mécanisme de transmission supplémentaire est un étage de démultiplication.

5. Groupe motopropulseur selon l'une quelconque des revendications précédentes, dans lequel le premier rapport de transmission est un entraînement direct, 1:1, et le deuxième rapport de transmission est de 1:2.

6. Procédé de commande d'un groupe motopropulseur (1) selon l'une quelconque des revendications 1 à 5, dans lequel le mécanisme de transmission supplémentaire (3) est commandé par un système de gestion de véhicule (VMS) et dans lequel
- au cours du démarrage du véhicule, le premier rapport de transmission du mécanisme de transmission supplémentaire (3) est utilisé,
- lorsqu'une valeur de seuil de vitesse supérieure du moteur (2) est atteinte, le mécanisme de transmission supplémentaire (3) passe du premier rapport de transmission au deuxième rapport de transmission, et
- lorsqu'une valeur de seuil de vitesse inférieure du moteur (2) est atteinte, le mécanisme de transmission supplémentaire (3) passe du deuxième rapport de transmission au premier rapport de transmission,
- la masse rotative (4) est désengagée du groupe motopropulseur (1) avant que la transmission supplémentaire (3) ne modifie son rapport de transmission.

7. Procédé selon la revendication 6, dans lequel
- lorsque la transmission principale (5) passe d'une vitesse inférieure à une vitesse supérieure, le mécanisme de transmission supplémentaire (3) passe du deuxième au premier rapport de transmission, et
- lorsque la transmission principale (5) passe d'une vitesse supérieure à une vitesse inférieure, le mécanisme de transmission supplémentaire (3) passe du premier au deuxième rapport de transmission.

8. Véhicule pourvu d'un mécanisme de transmission supplémentaire (3) selon l'une quelconque des revendications 1 à 5.
